# EUROPÄISCHE PATENTANMELDUNG

(11) **EP 1 589 736 A1**
(43) Veröffentlichungstag der Anmeldung: **26.10.2005**
(21) Anmeldenummer: 04009628.1
(22) Anmeldetag: 23.04.2004
(51) Int. Cl.: H04M 3/42, H04M 15/00

(54) **Verfahren zur Vermittlung von Telefongesprächen mit verteilten Rufgebühren**

(71) Anmelder: MEGA Satellitenfernsehen GmbH, 41564 Kaarst (DE)
(72) Erfinder: Varol, Selim, 41564 Kaarst (DE)
(74) Vertreter: Stenger, Watzke & Ring

(57) **Zusammenfassung**

Die Erfindung betrifft ein Verfahren zur Vermittlung von Telefongesprächen. Um ein Verfahren bereit zu stellen, das bei gleichzeitig weitestgehender Vermeidung von Fehlern bei der Gesprächsvermittlung wenig kostenintensiv und damit wirtschaftlich ist, wird mit der Erfindung ein Verfahren vorgeschlagen, bei dem die Rufnummer des Anrufempfängers vom Anrufenden (1) an ein Vermittlungssystem (3) übertragen wird, die Rufnummer in einem Datenbankabgleich auf Gültigkeit überprüft wird und anschließend nach vorhergehender Autorisierung durch den Anrufempfänger (2) eine kommunikationstechnische Verbindung (10) zwischen dem Anrufenden und dem Anrufempfänger automatisch aufgebaut wird, wobei nach erfolgtem Telefongespräch die hierfür zu zahlende Gebühr automatisch berechnet und anteilig jeweils dem Anrufempfänger sowie dem Anrufenden in Rechnung gestellt wird.

## Beschreibung

Die Erfindung betrifft ein Verfahren zur Vermittlung von Telefongesprächen.

Zur Vermittlung von Telefongesprächen ist es aus dem Stand der Technik bekannt, als Vermittlungspersonal sogenannte Operatoren (Fräulein vom Amt) einzusetzen, die nach Anfrage durch den Anrufenden eine Verbindung zum Anrufempfänger aufbauen. Die Telefongebühren für das zwischen dem Anrufenden und dem Anrufempfänger geführte Telefonat werden dabei in der Regel vom Anrufenden getragen.

Auch sind aus dem Stand der Technik sogenannte R-Gespräche bekannt. Die Besonderheit von R-Gesprächen besteht darin, daß nicht der Anrufende sondern der Anrufempfänger die in Folge des Telefongesprächs entstehenden Kosten übernimmt. Um sicherzustellen, daß nicht in ungerechtfertigter Weise empfängerseitig Kosten entstehen, wird der Anrufempfänger vor Aufbau einer kommunikationstechnischen Verbindung zwischen Anrufendem und Anrufempfänger vom Vermittlungspersonal dazu aufgefordert, sein Einverständnis zur Kostenübernahme zu erklären. Bleibt eine solche Erklärung des Anrufempfängers aus, so wird der Anrufende vom Vermittlungspersonal hierüber informiert und die vom Anrufenden gewünschte Verbindung zum Anrufempfänger wird durch das Vermittlungspersonal nicht freigegeben. Sollte der Anrufempfänger mit der Kostenübernahme einverstanden sein, so wird vom Vermittlungspersonal eine entsprechende kommunikationstechnische Verbindung zwischen Anrufendem und Anrufempfänger freigeschaltet. Ohne weitere Zwischenschaltung des Vermittlungspersonals kann alsdann ein Gespräch zwischen Anrufendem und Anrufempfänger geführt werden, wobei die hierdurch entstehenden Kosten dem Anrufempfänger in Rechnung gestellt werden.

Das vorbeschriebene Vermittlungsverfahren ist aus dem Stand der Technik an sich bekannt und hat sich im alltäglichen Praxiseinsatz bewährt. Von Nachteil sind jedoch die hohen Vermittlungskosten sowie die durch den manuellen Verbindungsaufbau bedingten Fehlschaltungen, die insbesondere zu Unzufriedenheit des Anrufenden bzw. des Anrufempfängers führen.

Begründet sind die hohen Vermittlungskosten einerseits durch das notwendigerweise erforderliche Vermittlungspersonal sowie andererseits durch die Ausrüstung, Wartung und Pflege der vom Vermittlungspersonal genutzten Arbeitsplätze. Für die Vermittlung eines empfangsseitig zu zahlenden Telefongespräches ist gemäß dem Stand der Technik vorgesehen, daß der Anrufende die mit Vermittlungspersonal besetzte Vermittlungsstelle anruft. Dies kann beispielsweise durch die Wahl der Ziffer "0" erfolgen. Nach dem Zufallsprinzip wird der Anrufende einem freien Vermittler, dem sogenannten Operator, zugestellt. Dieser fragt den Anrufenden nach der Rufnummer des Anrufempfängers, wählt die ihm mitgeteilte Rufnummer und fragt den Anrufempfänger im Falle der Gesprächsentgegennahme eines R-Gespräches nach seinem Einverständnis zur Kostenübernahme. Bestätigt dieser, so stellt der Operator eine kommunikationstechnische Verbindung zwischen Anrufendem und Anrufempfänger her. Bleibt die Bestätigung des Anrufempfängers aus oder nimmt dieser nach Rufwahl durch den Operator das Gespräch nicht entgegen, so wird der Anrufende hierüber informiert und ein Gesprächsaufbau zwischen Anrufendem und Anrufempfänger kommt nicht zustande.

Das manuell vom Operator durchzuführende Vermittlungsverfahren ist in nachteiliger Weise nicht nur zeit-, sondern auch wegen der Personalkosten wirtschaftlich aufwendig. Insgesamt ergeben sich daher vergleichsweise hohe Kosten alleine durch die Gesprächsvermittlung. Hinzu kommt, daß es beispielsweise infolge von Verständigungsschwierigkeiten zwischen Anrufendem/Anrufempfänger einerseits und Operator andererseits zu Fehlern bei der Gesprächsvermittlung kommen kann.

Ausgehend vom vorbeschriebenen Stand der Technik ist es daher Aufgabe der Erfindung, ein Verfahren zur Vermittlung von Telefongesprächen anzugeben, das bei gleichzeitig weitestgehender Vermeidung von Fehlern bei der Gesprächsvermittlung weniger kostenintensiv und damit wirtschaftlicher ist.

Zur Lösung dieser Aufgabe wird mit der Erfindung vorgeschlagen ein Verfahren zur Vermittlung von Telefongesprächen, bei dem die Rufnummer des Anrufempfängers vom Anrufenden an ein Vermittlungssystem übertragen wird, die Rufnummer in einem Datenbankabgleich auf Gültigkeit überprüft wird und anschließend nach vorhergehender Autorisierung durch den Anrufempfänger eine kommunikationstechnische Verbindung zwischen dem Anrufenden und dem Anrufempfänger automatisch aufgebaut wird, wobei nach erfolgtem Telefongespräch die hierfür zu zahlende Gebühr automatisch berechnet und anteilig jeweils dem Anrufempfänger sowie dem Anrufenden in Rechnung gestellt wird. '

Das erfindungsgemäße Verfahren zeichnet sich zum einen dadurch aus, daß es vollautomatisch, d. h. ohne Zwischenschaltung eines Vemittlungspersonals abgewickelt wird. Zum anderen weist das erfindungsgemäße Verfahren die Besonderheit auf, daß die für das Telefongespräch zu zahlende Gebühr vom Vermittlungssystem automatisch berechnet und anteilig jeweils dem Anrufempfänger sowie dem Anrufenden in Rechnung gestellt wird. Anders als aus dem Stand der Technik vorbekannt, werden mithin die anfallenden Telefongebühren nicht allein vom Anrufenden oder allein vom Anrufempfänger getragen, vielmehr ist vorgesehen, daß eine Aufteilung der zu zahlenden Telefongebühr erfolgt, wobei der eine Teil vom Anrufenden und der andere Teil vom Anrufempfänger zu begleichen ist. Dabei können die für das Telefongespräch zu zahlenden Gebühren zu gleichen Teilen aufgeteilt werden, so daß die Gebühren hälftig jeweils vom Anrufenden einerseits und vom Anrufempfänger andererseits zu tragen sind. Eine Rechnungsstellung kann sowohl für den Anrufenden als auch für den Anrufempfänger automatisch durchgeführt werden.

Erfindungsgemäß erfolgt im Unterschied zum Stand der Technik eine Gesprächsvermittlung vollautomatisch, so daß der Einsatz von Vermittlungspersonal nicht erforderlich ist. Zu diesem Zweck ist ein computergesteuertes Vermittlungssystem vorgesehen, dem der Anrufende die Rufnummer des Anrufempfängers mitteilt.

Eingegeben wird die Rufnummer des Anrufempfängers über die Wahltastatur des auf Seiten des Anrufenden vorgesehenen Telefonapparates oder über eine Spracheingabe, so daß bei richtiger Eingabe durch den Anrufenden Vermittlungsfehler ausgeschlossen werden können. Die dem Vermittlungssystem auf diese Weise mitgeteilte Rufnummer wird zunächst in einem Datenbankabgleich auf Gültigkeit überprüft. Umfang einer solchen Prüfung kann beispielsweise die vom Anrufenden übertragene Rufnummer als solche sein, das heißt es wird in einem ersten Schritt vom System zunächst einmal überprüft, ob die vom Anrufenden angegebene Rufnummer tatsächlich existent ist. Je nach Informationsstand der Datenbank kann darüber hinaus überprüft werden, ob die als existent erkannte Rufnummer unter Umständen gesperrt ist, ob noch etwaig nicht gezahlte Rechnungen zur angegebenen Rufnummer existent sind oder ob die Rufnummer im Rahmen eines Gespräches mit anteiliger Kostenübernahme nicht anwählbar ist. Darüber hinaus sind je nach Bedarf weitere Überprüfungskriterien möglich, je nachdem, welche Informationen im Detail in der zur Gültigkeitsüberprüfung genutzten Datenbank gespeichert sind.

Nach erfolgreich durchgeführter Gültigkeitsüberprüfung der Rufnummer wird der Anrufempfänger vom Vermittlungssystem automatisch angewählt und über die Kostenfolge bei Entgegennahme des Telefongespräches informiert. Stimmt der Anrufempfänger der anteiligen Übernahme der Telefongesprächkosten zu, so baut das Vermittlungssystem zwischen dem Anrufenden und dem Anrufempfänger automatisch eine kommunikationstechnische Verbindung auf, so daß diese nunmehr das vom Anrufenden gewünschte Telefongespräch führen können. Die infolge dieses Telefongespräches entstehenden Kosten werden anteilig dem Anrufempfänger sowie dem Anrufenden in Rechnung gestellt.

Sollte der Anrufempfänger einer Kostenübernahme nicht zustimmen, so wird der Anrufende vom Vermittlungssystem hierüber informiert und eine kommunikationstechnische Verbindung zwischen dem Anrufenden und dem Anrufempfänger wird seitens des Vermittlungssystems nicht aufgebaut.

Die im Unterschied zum Stand der Technik vollautomatische Telefongesprächsvermittlung ermöglicht in vorteilhafter Weise zum einen einen vergleichsweise schnellen Verbindungsaufbau, zum anderen stellt sich eine deutlich verringerte Fehlerquote ein, denn erfolgt eine Gesprächsvermittlung ausschließlich aufgrund der vom Anrufenden selbst eingegebenen Rufnummer. Darüber hinaus ist das erfindungsgemäße Verfahren sehr viel weniger kostenintensiv, denn können insbesondere Personalkosten eingespart werden, da es nicht weiter erforderlich ist, zur Gesprächsvermittlung Vermittlungspersonal einzusetzen.

Gemäß einem weiteren Merkmal der Erfindung ist vorgesehen, daß das Vermittlungssystem vom Anrufenden angewählt wird und erst nach einem Verbindungsaufbau zwischen Vermittlungssystem und Anrufendem die Rufnummer des Anrufempfängers an das Vermittlungssystem übertragen wird. Vorgesehen ist gemäß diesem Merkmal der Erfindung, daß der Anrufende zunächst das Vermittlungssystem über eine entsprechende Rufnummer anwählt. Eine solche Rufnummer kann von dem die Vermittlung betreibenden Telekommunikationsunternehmen als Servicerufnummer ausgebildet sein, die vom Anrufenden kostenfrei gewählt werden kann. Sobald die kommunikationstechnische Verbindung zwischen Anrufendem und Vermittlungssystem aufgebaut ist, wird der Anrufende vom Vermittlungssystem dazu aufgefordert, die Rufnummer des von ihm gewünschten Anrufempfängers zu benennen. Dies kann beispielsweise durch Eingabe über das vom Anrufenden verwendete Endgerät oder aber auch durch Spracheingabe erfolgen. Zudem können dem Anrufenden die gültigen Tarife, weitergehende Informationen zur Anwendung, Hilfestellungen oder dergleichen übermittelt werden.

Zur Identifikation des Anrufenden durch den Anrufempfänger fordert das Vermittlungssystem zudem dazu auf, eine den Anrufenden identifizierende Information an das Vermittlungssystem zu übertragen. Im einfachsten Fall kann dies der Name des Anrufenden sein, der diesen dem Vermittlungssystem durch einfache Spracheingabe übermittelt. Selbstverständlich sind auch andere identifizierende Informationen an das Vermittlungssystem übertragbar, denn kommt es lediglich darauf an, daß der Anrufempfänger anhand der vom Anrufenden gegebenen Information diesen erkennen und so entscheiden kann, ob eine kommunikationstechnische Verbindung zwischen Anrufendem und Anrufempfänger zustande kommen soll. Die den Anrufenden identifizierende Information wird vom Vermittlungssystem zwischengespeichert, so daß diese im weiteren Verfahrensablauf an den Anrufempfänger weitergeleitet werden kann.

Sobald dem Vermittlungssystem die Rufnummer des Anrufempfängers sowie die den Anrufenden identifizierende Information bekannt sind, wird der Anrufempfänger vom Vermittlungssystem automatisch angewählt. Sofern dieser das Gespräch entgegennimmt, wird ihm vom Vermittlungssystem die den Anrufenden identifizierende Information, beispielsweise der Name des Anrufenden, mitgeteilt und er wird vom Vermittlungssystem darüber informiert, daß nach seiner Autorisierung die Kosten des zwischen ihm und den Anrufenden zu führende Telefongespräch anteilig zu seinen Lasten geht. Durch Tasteneingabe am Telefon oder durch Spracheingabe wird dem Anrufempfänger daraufhin vom Vermittlungssystem die Gelegenheit gegeben, sein Einverständnis zur anteiligen Kostenübernahme zu erklären. Erklärt der Anrufempfänger sein Einverständnis, so wird eine komunikationstechnische Verbindung zwischen dem Anrufenden und dem Anrufempfänger automatisch aufgebaut. Unterbleibt die Einverständniserklärung des Anrufempfängers, so kommt eine kommunikationstechnische Verbindung zwischen dem Anrufenden und dem Anrufempfänger nicht zustande und der Anrufende wird vom Vermittlungssystem über das Ausbleiben des Einverständnisses des Anrufempfängers informiert.

Sollte sich nach einer Gültigkeitsüberprüfung der von dem Anrufenden angegebenen Rufnummer ergeben, daß diese nicht existent, gesperrt oder sonstwie nicht zugänglich für ein Telefongespräch mit anteiliger Kostenübernahme ist, so wird der Anrufende hierüber gleichfalls vom Vermittlungssystem automatisch informiert. Zu diesem Zweck stehen dem Vermittlungssystem entsprechende Ansagen, vorzugsweise in digitaler Form, zur Verfügung, die vom Vermittlungssystem verwaltet und bedarfsgerecht abgespielt werden können. Auch wird der Anrufende im Falle einer zum Anrufempfänger besetzten Leitung informiert und darauf hingewiesen, daß eine Gesprächsvermittlung derzeit nicht durchgeführt werden kann.

Bevor das Vermittlungssystem den Anrufempfänger um sein Einverständnis zur anteiligen Kostenübernahme bittet, wird dieser über die derzeit gültigen Tarife vom Vermittlungssystem automatisch informiert. Auch diese Tarifinformation kann vorzugsweise in Form vorgefertigter und vom Vermittlungssystem verwalteter Sprachbausteine an den Anrufempfänger übertragen werden. Vorgesehen sein kann in diesem Zusammenhang, daß der Anrufempfänger während des Telefongespräches in immer wiederkehrenden Zeitabständen wunschgemäß darüber informiert wird, welche Kosten bisher infolge des Telefongespräches angefallen sind.

Vorzugsweise ist die Vermittlung des Telefongespräches sowohl für den Anrufenden als auch für den Anrufempfänger kostenlos. Erst nach dem durch den Anrufempfänger autorisierten Zustandekommen der kommunikationstechnischen Verbindung zwischen dem Anrufenden und dem Anrufempfänger entstehen die vom Anrufempfänger teilweise zu übernehmenden Kosten. Für eine exakte Abrechnung wird daher der Zeitpunkt des Zustandekommens der kommunikationstechnischen Verbindung zwischen dem Anrufenden und dem Anrufempfänger vom Vermittlungssystem erfaßt und die Zeit bis zur Beendigung der kommunikationstechnischen Verbindung gestoppt. Die sich hieraus ergebende Zeitdauer ergibt in Kombination mit dem für das Telefongespräch gültigen Tarif die vom Anrufempfänger und vom Anrufenden jeweils anteilig zu zahlenden Gebühren. Erfindungsgemäß ist dabei vorgesehen, daß die zu zahlenden Gebühren automatisch vom Vermittlungssystem berechnet und sowohl dem Anrufempfänger als auch dem Anrufenden in Rechnung gestellt werden. Die automatisch berechneten Rechnungsbeträge können zudem in der Datenbank des Vermittlungssystems gespeichert werden, um so bei der vorbeschriebenen Gültigkeitsüberprüfung ein mögliches Ausschlußkriterium definieren zu können. Dies könnte sich beispielsweise dann ergeben, wenn der Anrufempfänger oder der Anrufende einer Begleichung noch offener Rechnungen nicht nachkommt, so daß die Rufnummer des Anrufempfängers und/oder des Anrufenden für die Vermittlung von Telefongesprächen solange gesperrt bleibt, bis die noch offenen Rechnungen bezahlt sind. Vorzugsweise ist daher auch der Zahlungseingang in der Datenbank des Vermittlungssystems zu speichern.

Um sicherzustellen, daß die vom Anrufenden an das Vermittlungssystem zur Identifizierung seiner Person zu übergebende Information nicht mißbräuchlich zur Übermittlung von Kurzinformationen an den Anrufempfänger genutzt wird, ist erfindungsgemäß vorgesehen, daß die den Anrufenden identifizierende Information nur eine bestimmte Wort- oder Zeichenlänge aufweisen darf. Zu diesem Zweck kann beispielsweise vorgesehen sein, daß die Zeit, die dem Anrufenden vom Vermittlungssystem zur Übermittlung der ihn identifizierenden Information zur Verfügung gestellt wird, zeitlich begrenzt ist. Vorgesehen sein kann in diesem Zusammenhang beispielsweise ein Zeitrahmen von 1 bis 2 Sekunden. Eine den Anrufenden identifizierenden Information, die nicht innerhalb dieses Zeitrahmens dem Vermittlungssystem mitgeteilt werden kann, wird wahlweise entweder gar nicht oder nur bezüglich der im Zeitrahmen übermittelten Information an den Anrufempfänger weitergeleitet. Zudem kann bei einer vom Vermittlungssystem festgestellten häufigen Überschreitung des zur Informationsvermittlung zur Verfügung stehenden Zeitrahmens ein entsprechender Eintrag in der Datenbank vorgenommen werden, der gleichfalls zur Sperrung der Rufnummer des Anrufempfängers oder des Anrufenden verwendet werden kann.

Gemäß einer alternativen Ausgestaltung der Erfindung ist vorgesehen, daß das Vermittlungssystem vom Anrufenden angewählt wird, wobei zeitgleich mit Anwahl des Vermittlungssystems die Rufnummer des Anrufempfängers an das Vermittlungssystem übertragen wird. Zu diesem Zweck ist vorgesehen, daß der Anrufer zur Anwahl des Vermittlungssystems eine mehrstellige Rufnummer verwendet, die aus Anwahlnummer für das Vermittlungssystem einerseits und der Rufnummer des Anrufempfängers andererseits besteht. So kann beispielsweise vorgesehen sein, daß die Rufnummer zur Anwahl des Vermittlungssystems ein mehrstelliger Zahlencode ist, der eine definierte Ziffernzahl aufweist. Angehängt an diesen Zahlencode ist die Rufnummer des Anrufempfängers, die beispielsweise aus Vorwahl und Apparatennummer des Anrufempfängers gebildet ist. Vom Vermittlungssystem wird die an den Zahlencode angehängte Rufnummer des Anrufempfängers automatisch erkannt, so daß diesem bereits mit Anwahl durch den Anrufenden die im weiteren zu wählende Rufnummer des Anrufempfängers bekannt ist.

Nach Anwahl des Vermittlungssystems durch den Anrufenden kann alsdann anhand der bereits bekannten Rufnummer des Anrufempfängers eine Statusüberprüfung des Anrufempfängers durchgeführt werden, das heißt es kann vom Vermittlungssystem überprüft werden, ob der Anschluß des Anrufempfängers besetzt ist oder nicht. Sollte diese Überprüfung ergeben, daß der Anschluß des Anrufempfängers besetzt ist, so wird dies dem Anrufenden automatisch mitgeteilt und die Verbindung zwischen Anrufendem und Vermittlungssystem wird automatisch unterbrochen. Das Gespräch ist damit beendet.

Sollte die Statusüberprüfung des Anrufempfängers ergeben, daß der Anschluß des Anrufempfängers nicht besetzt ist, so erfolgt in einem Datenbankabgleich eine Gültigkeitsüberprüfung der Rufnummer des Anschlußempfängers. Zeitgleich wird durch Einschaltung des Freizeichens dem Anrufenden signalisiert, daß der Anschluß des Anrufempfängers nicht besetzt ist und nach abgeschlossener Gültigkeitsüberprüfung der Rufnummer eine Verbindung zum Anrufempfänger aufgebaut wird.

Sollte sich nach einer Gültigkeitsüberprüfung der von dem Anrufenden angegebenen Rufnummer ergeben, daß diese nicht existent, gesperrt oder sonstwie nicht zugänglich für ein empfangsseitig anteilig zu zahlendes Telefongespräch ist, so wird der Anrufende hierüber gleichfalls vom Vermittlungssystem automatisch informiert. Zu diesem Zweck stehen dem Vermittlungssystem entsprechende Ansagen, vorzugsweise in digitaler Form, zur Verfügung, die vom Vermittlungssystem verwaltet und bedarfsgerecht abgespielt werden können. Sollte hingegen die Rufnummernüberprüfung erfolgreich durchgeführt sein, so wird eine kommunikationstechnische Verbindung zwischen dem Anrufenden einerseits und dem Anrufempfänger andererseits aufgebaut. Nimmt der Anrufempfänger beispielsweise wegen Abwesenheit das bei ihm eingehende Gespräch nicht entgegen, so wird der Anrufende hierüber informiert und die Verbindung zwischen dem Anrufenden und dem Vermittlungssystem wird unterbrochen.

Nimmt der Anrufempfänger den bei ihm eingehenden Anruf entgegen, so werden zunächst einmal der Anrufende und der Anrufempfänger vom Vermittlungssystem über die anstehende Vermittlung des empfangsseitig anteilig zu zahlenden Telefongespräches informiert. In diesem Zusammenhang wird der Anrufende vom Vermittlungssystem dazu aufgefordert, beispielsweise im Anschluß an ein vom Vermittlungssystem übersandtes akustisches Signal, eine ihn identifizierende Information, vorzugsweise seinen Namen, bekannt zu geben, was vorzugsweise mittels Spracheingabe geschieht. Zudem können dem Anrufenden Tarifinformationen, weitergehende Informationen zur Anwendung, Hilfestellungen oder dergleichen übermittelt werden. Der Anrufempfänger wird indes vom Vermittlungssystem über die Funktionsweise des empfangsseitig anteilig zu zahlenden Telefongespräches sowie über die gültigen Tarife informiert. Alsdann wird vom Vermittlungssystem eine kommunikationstechnische Verbindung zwischen dem Anrufenden und dem Anrufempfänger für ein vorgebbares Zeitintervall automatisch aufgebaut und der Anrufer wird durch Abgabe eines entsprechenden Signals dazu aufgefordert, nunmehr seine ihn identifizierende Information, vorzugsweise durch Spracheingabe bekannt zu machen. Diese wird dann über die aufgebaute kommunikationstechnische Verbindung zwischen Anrufendem und Anrufempfänger direkt an den Anrufempfänger weitergeleitet, so daß dieser darüber in Kenntnis gesetzt wird, wer die Person des Anrufenden ist. Nach Ablauf des vorgebbaren Zeitintervalls wird die kommunikationstechnische Verbindung zwischen Anrufendem und Anrufempfänger wieder getrennt.

Im weiteren wird nun der Anrufende vom Verbindungssystem dazu aufgefordert, die Verbindung zu halten, während der Anrufempfänger vom Verbindungssystem nach seinem Einverständnis befragt wird, die Kosten des Telefongespräches anteilig zu übernehmen. Im Falle der positiven Bestätigung durch den Anrufempfänger wird erneut eine kommunikationstechnische Verbindung zwischen Anrufendem und Anrufempfänger aufgebaut, so daß nunmehr das Telefongespräch geführt werden kann. Sollte der Anrufempfänger sein Einverständnis zur anteiligen Kostenübernahme nicht geben, so wird dies dem Anrufenden mitgeteilt und die Verbindung des Anrufenden zum Vermittlungssystem einerseits sowie auch die Verbindung des Vermittlungssystems zum Anrufempfängers andererseits wird abgebrochen. Das Gespräch ist damit beendet.

Im Unterschied zu dem aus dem Stand der Technik bekannten Verfahren ist das erfindungsgemäße Verfahren gemäß dieser alternativen Ausgestaltung mithin nicht nur vollautomatisch durchführbar, zudem wird bereits mit Anwahl des Vermittlungssystems durch den Anrufenden die Rufnummer des Anrufempfängers übertragen. Es findet mithin in vorteilhafter Weise keine zeitraubende Kommunikation mehr zwischen Anrufendem und Vermittlungssystem statt. Hierdurch kann nicht nur die Vermittlungszeit zwischen Anrufendem und Anrufempfänger verkürzt werden, auch ergibt sich hierdurch eine Kostenreduzierung, denn gehen die Kosten zur Vermittlungsverbindung zwischen Anrufendem und Vermittlungssystem zu Lasten des Netzbetreibers.

Von Vorteil ist des weiteren, daß die zur Identifizierung des Anrufenden an den Anrufempfänger zu übermittelnde Information nicht über das Vermittlungssystem, sondern über eine direkt zwischen dem Anrufenden und dem Anrufempfänger temporär ausgebildete kommunikationstechnische Verbindung geführt wird. Erreicht wird hierdurch eine Entlastung des Vermittlungssystems, das nur eine begrenzte Anzahl von Vermittlungsdiensten gleichzeitig abwickeln kann. Darüber hinaus kann im Falle der Gesprächsautorisierung durch den Anrufempfänger auch die zur Übertragung der den Anrufenden identifizierenden Information erfolgte Freischaltung der kommunikationstechnischen Verbindung zwischen Anrufendem und Anrufempfänger in Rechnung gestellt werden. Zu Lasten des Anrufempfängers und des Anrufenden kann so eine weitere Kostenreduzierung des das Vermittlungssystem bereitstellenden Betreibers erreicht werden.

Was die Aufteilung der zu zahlenden Telefongebühren zwischen Anrufempfänger und Anrufenden angeht, so kann gemäß einer bevorzugten Ausführungsform der Erfindung vorgesehen sein, daß das Vermittlungssystem eine zu gleichen Teilen vorzunehmende Aufsplittung der zu entrichtenden Telefongebühren vornimmt. Sowohl Anrufempfänger als auch Anrufender haben mithin keinen Einfluß auf das Aufteilungsverhältnis. Vorgesehen sein kann beispielsweise ein Aufteilungsverhältnis von 50 zu 50, was bedeutet, daß Anrufender und Anrufempfänger jeweils die Hälfte der anfallenden Telefongebühren tragen. Gemäß einer alternativen Ausgestaltungsform der Erfindung kann vorgesehen sein, daß das Aufteilungsverhältnis nicht statisch vorgegeben, sondern vielmehr vom Anrufenden wahlweise für jedes Telefongespräch individuell vorgebbar ist. So kann beispielsweise vorgesehen sein, daß der Anrufende vom Vermittlungssystem nach dem Aufteilungsverhältnis der zu zahlenden Telefongebühren befragt wird. Der Anrufende erhält sodann Gelegenheit, den vom Anrufempfänger zu tragenden Anteil der Telefongebühr anzugeben. Diese Information wird vom Vermittlungssystem an den Anrufempfänger weitergeleitet, so daß dieser entscheiden kann, ob er das vom Anrufenden gewünschte Telefongespräch annimmt oder nicht. Vorgesehen sein kann in diesem Zusammenhang, daß das Vermittlungssystem eine Reihe unterschiedlicher Aufteilungsverhältnisse zur Wahl stellt, die vom Anrufenden ausgewählt werden können. So kann das Vermittlungssystem beispielsweise drei Aufteilungsverhältnisse vorgeben, gemäß welcher eine Kostenübernahme durch den Anrufempfänger entweder zu 60%, zu 50% oder zu 40% zu erfolgen hat. Der Anrufende kann sich eines der vorgenannten Aufteilungsverhältnisse aussuchen, welches dem Anrufempfänger automatisch mitgeteilt wird. Es versteht sich von selbst, daß wahlweise auch andere Aufteilungsverhältnisse durch das Vermittlungssystem vorgegeben werden können.

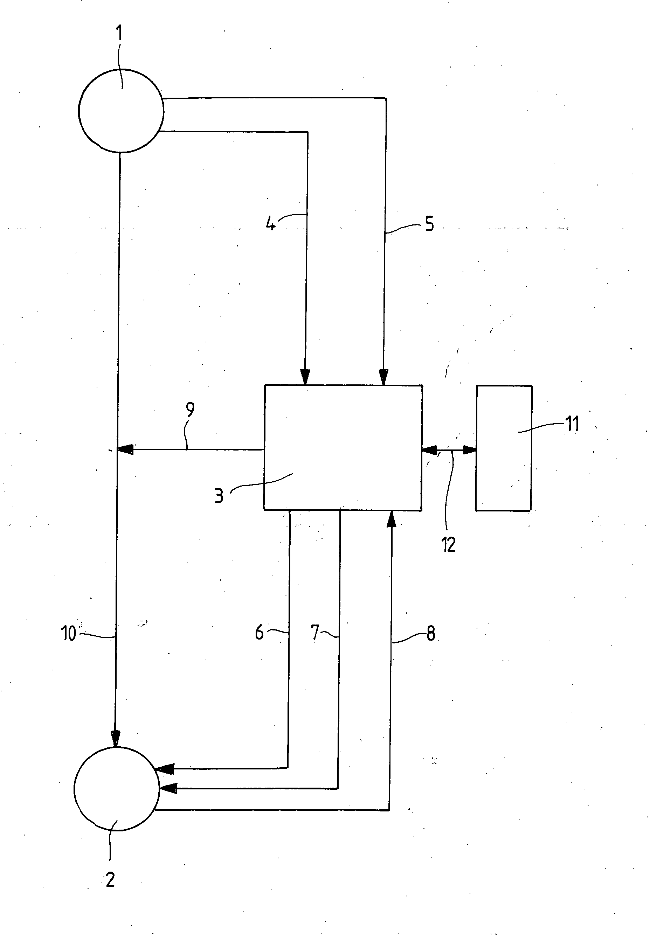

Weitere Merkmale und Vorteile der Erfindung ergeben sich aus der Beschreibung anhand der nachfolgenden Fig. 1, die schematisch einen beispielhaften Ablauf des erfindungsgemäßen Vermittlungsverfahrens zeigt.

Schematisch dargestellt sind in Fig. 1 der Anrufende 1, der Anrufempfänger 2 sowie das Vermittlungssystem 3. Zur Vermittlung eines Telefongespräches zwischen Anrufendem 1 und Anrufempfänger 2 hat der Anrufende 1 zunächst das Vermittlungssystem 3 anzuwählen, was in Fig. 1 schematisch durch den mit 4 bezeichneten Pfeil kenntlich gemacht ist. Zur Anwahl des Vermittlungssystems 3 durch den Anrufenden 1 steht vorzugsweise eine vom Betreiber des Vermittlungssystems 3 kostenlos bereitgestellte Servicenummer zur Verfügung, so daß das Telefongespräch zwischen Anrufendem 1 und Vermittlungssystem 3 für den Anrufenden 1 kostenfrei ist.

Nach Zustandekommen der kommunikationstechnischen Verbindung zwischen Anrufendem 1 und Vermittlungssystem 3 wird der Anrufende 1 vom Vermittlungssystem 3 über den Ablauf des Vermittlungsverfahrens und die für ihn anfallenden Telefongebühren informiert und darum gebeten, die Rufnummer des Anrufempfängers sowie seinen Namen zu nennen. Dies kann beispielsweise durch Spracheingabe, Tasteneingabe über das auf Seiten des Anrufenden vorhandenen Telefons oder durch eine Kombination dieser Möglichkeiten erfolgen. Die Eingabe der vom Vermittlungssystem geforderten Informationen ist in der Fig. 1 durch den mit 5 bezeichneten Pfeil symbolisiert.

Nach Übergabe der Rufnummer des Anrufempfängers 2 vom Anrufenden 1 wird vom Vermittlungssystem 3 mittels eines Datenbankabgleichs eine Gültigkeitsprüfung der übergebenen Rufnummer durchgeführt. Zudem wird der vom Anrufenden 1 übergebene Name vom Vermittlungssystem 3 gespeichert. Nach erfolgreich durchgeführter Rufnummernüberprüfung wählt das Vermittlungssystem 3 den Anrufempfänger 2 an, was durch den mit 6 gekennzeichneten Pfeil symbolisiert ist. Sobald der Anrufempfänger 2 das Gespräch entgegennimmt, wird er vom Vermittlungssystem unter Nennung des Namens des Anrufenden 1 darüber informiert, daß der Anrufende 1 ein Gespräch führen möchte, dessen Kosten anteilig dem Anrufempfänger 2 in Rechnung gestellt werden. Auch werden dem Anrufempfänger die gültigen Telefongebühren mitgeteilt. Die dem Anrufempfänger 2 durch das Vermittlungssystem 3 bekannt gemachten Informationen sind in der Fig. 1 durch den mit 7 gekennzeichneten Pfeil symbolisiert.

Im weiteren Verfahrensablauf fordert das Vermittlungssystem 3 den Anrufempfänger 2 des weiteren dazu auf, seine Einwilligung zur teilweisen, d.h. anteiligen Kostenübernahme zu erklären. Dieses kann entweder durch Spracheingabe oder auch durch Wahl einer entsprechenden Tastenkombination erfolgen, was durch den mit 8 gekennzeichneten Pfeil symbolisiert ist.

Sobald dem Vermittlungssystem 3 die Autorisierung der anteiligen Kostenübernahme durch den Anrufempfänger 2 zugegangen ist, gibt dieses entsprechend dem mit 9 gekennzeichneten Pfeil automatisch eine kommunikationstechnische Verbindung 10 zwischen dem Anrufenden 1 und dem Anrufempfänger 2 frei, so daß diese nunmehr ohne Zwischenschaltung des Vermittlungssystems 3 ein Telefongespräch über die kommunikationstechnische Verbindung 10 führen können.

Mit Freischaltung der kommunikationstechnischen Verbindung 10 zwischen dem Anrufenden 1 und dem Anrufempfänger 2 übernimmt der Anrufempfänger 2 die für das Telefongespräch entstehenden Kosten anteilig. Anrufender 1 und Anrufempfänger 2 teilen sich mithin die infolge des Telefonats entstehenden Telefongebühren. Zu diesem Zweck wird der Beginn der Verbindungsfreischaltung vom Vermittlungssystem 3 erfaßt und es wird die Zeitdauer des geführten Telefongespräches gemessen. Auf Grundlage der dem Anrufempfänger 2 und dem Anrufenden 1 zuvor bekanntgemachten Tarife ergibt sich sodann die Gebühr für das geführte Telefongespräch, was vom Vermittlungssystem 3 automatisch berechnet und anteilig jeweils dem Anrufempfänger 2 sowie dem Anrufenden 1 in Rechnung gestellt wird.

Die anteilig sowohl vom Anrufenden 1 als auch vom Anrufempfänger 2 zu tragenden Telefongebühren können gemäß einem bevorzugten Vorschlag der Erfindung zu gleichen Teilen aufgeteilt werden. Demnach würden der Anrufende 1 und der Anrufempfänger 2 jeweils 50% der anfallenden Telefongebühren tragen. Es versteht sich von selbst, daß die Aufteilung der Telefongebühren auch zu ungleich großen Teilen erfolgen kann, so daß der Anrufende 1 beispielsweise 40% und der Anrufempfänger 60% der anfallenden Telefongebühren trägt. Welche Gebührenaufteilung vorgesehen ist, kann vom Betreiber des Vermittlungssystems 3 wahlweise vorgegeben werden. Auch ist es denkbar, daß die Gebührenaufteilung durch Vorgabe durch den Anrufenden 1 individuell für jedes zu führende Telefonat separat ausgewählt werden kann. Erfindungswesentlich ist allein, daß die anfallenden Telefonkosten nicht sämtlichst entweder vom Anrufenden 1 oder vom Anrufempfänger 2 getragen, sondern vielmehr zwischen den Gesprächspartnern aufgeteilt werden. Eine solche Aufteilung kann zu gleichen Teilen, aber auch zu ungleichen Teilen erfolgen. Dabei kommt die Gesprächsvermittlung in jedem Fall nur dann zustande, wenn der Anrufempfänger 2 seine Zustimmung zur teilweisen, d. h. anteiligen Kostenübernahme erklärt hat. Bleibt diese Erklärung des Anrufempfängers 2 aus, so kommt eine kommunikationstechnische Verbindung zwischen Anrufendem 1 und Anrufempfänger 2 nicht zustande, worüber der Anrufende 1 entsprechend informiert wird.

Für eine Überprüfung der Gültigkeit der vom Anrufenden 1 angegebenen Rufnummer des Anrufempfängers 2 ist eine Datenbank 11 vorgesehen, die über eine Verbindung 12 kommunikationstechnisch mit dem Vermittlungssystem 3 in Verbindung steht.

Das vorbeschriebene Ausführungsbeispiel dient lediglich der Erläuterung und wirkt nicht beschränkend.

### Bezugszeichenliste

- 1: Anrufer
- 2: Anrufempfänger
- 3: Vermittlungssystem
- 4: Pfeil
- 5: Pfeil
- 6: Pfeil
- 7: Pfeil
- 8: Pfeil
- 9: Pfeil
- 10: kommunikationstechnische Verbindung
- 11: Datenbank
- 12: Verbindung

## Patentansprüche

1. Verfahren zur Vermittlung von Telefongesprächen, bei dem die Rufnummer des Anrufempfängers vom Anrufenden an ein Vermittlungssystem übertragen wird, die Rufnummer in einem Datenbankabgleich auf Gültigkeit überprüft wird und anschließend nach vorhergehender Autorisierung durch den Anrufempfänger eine kommunikationstechnische Verbindung zwischen dem Anrufenden und dem Anrufempfänger automatisch aufgebaut wird, wobei nach erfolgtem Telefongespräch die hierfür zu zahlende Gebühr automatisch berechnet und anteilig jeweils dem Anrufempfänger sowie dem Anrufenden in Rechnung gestellt wird.

2. Verfahren nach Anspruch 1, **dadurch gekennzeichnet, daß** das Vermittlungssystem vom Anrufenden angewählt wird und erst nach einem Verbindungsaufbau zwischen Vermittlungssystem und Anrufendem die Rufnummer des Anrufempfängers an das Vermittlungssystem übertragen wird.

3. Verfahren nach Anspruch 1 oder 2, **dadurch gekennzeichnet, daß** an das Vermittlungssystem eine den Anrufenden identifizierende Information übertragen wird.

4. Verfahren nach Anspruch 3, **dadurch gekennzeichnet, daß** die den Anrufenden identifizierende Information gespeichert wird.

5. Verfahren nach einem der vorhergehenden Ansprüche, **dadurch gekennzeichnet, daß** die den Anrufenden identifizierende Information vom Vermittlungssystem automatisch an den Anrufempfänger weitergeleitet wird.

6. Verfahren nach einem der vorhergehenden Ansprüche, **dadurch gekennzeichnet, daß** bei ausbleibender Autorisierung durch den Anrufempfänger an den Anrufenden eine entsprechende Benachrichtigung übermittelt wird.

7. Verfahren nach einem der vorhergehenden Ansprüche, **dadurch gekennzeichnet, daß** eine Statusüberprüfung des Anrufempfängers und/oder des Anrufenden durchgeführt wird.

8. Verfahren nach einem der vorhergehenden Ansprüche, **dadurch gekennzeichnet, daß** die für das Telefongespräch zu zahlende Gebühr zu gleichen Teilen aufgeteilt und dem Anrufempfänger sowie dem Anrufenden anteilig in Rechnung gestellt wird.
